# FASCICULE DE BREVET EUROPEEN

(11) **EP 3 227 185 B1**
(45) Date de publication et mention de la délivrance du brevet: **29.01.2020**
(21) Numéro de dépôt: 15807628.1
(22) Date de dépôt: 04.12.2015
(51) Int. Cl.: B64G 1/64

(54) **DISPOSITIF DE LIAISON D'OBJETS PAR LAME**
VORRICHTUNG ZUM VERBINDEN ZWEIER TEILE MITTELS EINEM ROLLBAND
DEVICE FOR CONNECTING TWO OBJECTS BY MEANS OF A TAPE SPRING

(30) Priorité: 05.12.2014 FR 1402778
(43) Date de publication de la demande: 11.10.2017
(73) Titulaire: THALES, 92400 Courbevoie (FR)
(72) Inventeur: VÉZAIN, Stéphane, 06210 Mandelieu (FR); BILLOT, Carole, 06156 Cannes La Bocca Cedex (FR); STANEK, Didier, 06150 Cannes La Bocca (FR); BAUDASSÉ, Yannick, 06156 Cannes La Bocca Cedex (FR)
(74) Mandataire: Collet, Alain
(86) Numéro de dépôt international: PCT/EP2015/078615
(87) Numéro de publication internationale: WO 2016/087629

(56) Documents cités:
- EP-A1- 2 740 669
- FR-A1- 2 528 385
- US-A- 5 364 046

## Description

La présente invention concerne un dispositif de liaison d'objets par lame. Elle s'applique à tout domaine pour lier un premier objet à un deuxième objet. L'invention peut trouver application pour l'envoi d'un projectile à partir d'un premier objet. L'invention s'applique notamment dans le domaine spatial. L'invention concerne également un canon et un dispositif de mise en rotation d'un projectile.

Le nombre de débris spatiaux, de taille plus ou moins importante, est en constante augmentation. L'augmentation des débris spatiaux entraîne une augmentation du risque de collisions entre satellites et/ou avec une station spatiale. Certains débris sont jugés critiques à cause de leur taille et/ou de leur positionnement sur des zones appelées zones à risques, par exemple une orbite utile. On peut citer l'exemple d'un satellite en déperdition, des étages de fusée, pouvant être positionnés sur une orbite utile. La désorbitation de tels débris devient urgente pour les écarter de l'orbite utile. Se pose alors la question de savoir comment enlever ces débris pour dépolluer l'espace d'une façon efficace et sûre. En effet, il faut prévoir un appareillage et des manœuvres fiables pour enlever les débris sous peine de générer des collisions non souhaitées et ainsi encore plus de débris.

Différentes solutions ont été suggérées. Parmi elles, on peut citer un bras articulé pour saisir les débris, un gigantesque filet ou un véhicule robot destinés à capturer les débris et à les ramener sur Terre ou à les parquer sur une orbite dite de parquage, loin des orbites utiles. Ces solutions sont coûteuses et difficiles à mettre en œuvre. Le document FR 2528385 décrit un mécanisme d'accostage et d'arrimage pour deux vaisseaux spatiaux l'un comprenant un mât avec des moyens de solidarisation, l'autre comprenant des moyens de solidarisation complémentaires des moyens de solidarisation portés par le mât qui est déployé jusqu'à ce que les moyens de solidarisation de l'un soient en prise avec les moyens de solidarisation complémentaires de l'autre. Le document US 5364046 décrit deux engins spatiaux, l'un comprenant un bras se terminant par une portion de cône convexe de laquelle sort un câble avec une balle, l'autre comprenant une portion de cône concave se terminant par un cylindre pouvant recevoir la balle de l'autre engin.

Une autre solution consiste à harponner l'objet cible considéré, à savoir le débris, pour le tracter hors de la zone à risque. Un problème majeur concerne la stabilité du harpon. En effet, l'atmosphère terrestre, que l'on peut considérer comme un milieu visqueux, engendre une résistance de l'air. Au contraire, dans l'espace, c'est-à-dire dans un vide presque parfait, un objet qui y évolue s'affranchit presque totalement de la résistance de l'air. Il en résulte qu'il n'y a pas d'effet aérodynamique sur cet objet. Autrement dit, dans le vide, on ne peut pas compter sur les effets aérodynamiques pour maintenir l'orientation du harpon dans l'axe de sa trajectoire. Une fois lancé, le harpon, maintenu généralement par un câble, ne se dirige alors plus dans la direction souhaitée vers l'objet cible. Il faut donc prendre en compte des contraintes supplémentaires liées au domaine spatial pour la conception de la solution du dispositif destiné à harponner l'objet cible. De plus, le lien entre le harpon et l'objet cible (c'est-à-dire le débris) peut créer des perturbations de la trajectoire du harpon lors du déroulement du câble. Et le câble peut aussi s'emmêler lorsqu'il est en stocké.

L'invention vise à pallier tout ou partie des problèmes cités plus haut en proposant un dispositif consistant à lier un premier objet à un deuxième objet, le projectile, sans problème d'enroulement c'est-à-dire un dispositif de liaison permettant de lier un premier objet au projectile au moyen d'une lame apte à s'enrouler et se dérouler de manière à ne pas gêner la trajectoire du projectile.

A cet effet, l'invention a pour objet un dispositif de liaison comprenant un premier objet et un deuxième objet, caractérisé en ce qu'il comprend une première lame, apte à passer d'une configuration enroulée autour d'un axe Z autour d'un support fixé au premier objet à une configuration déployée selon un axe X sensiblement perpendiculaire à l'axe Z, la lame ayant une extrémité destinée à entrer en contact avec le deuxième objet, de manière à lier le premier objet au deuxième objet.

Selon un mode de réalisation, l'extrémité de la première lame est liée au deuxième objet par un élément de liaison, et l'élément de liaison est un composant mécanique permettant la rotation du deuxième objet autour de l'axe X.

Selon un autre mode de réalisation, le dispositif de liaison comprend un premier et un second flasque positionnés sensiblement parallèlement au plan XY, de part et d'autre de la première lame.

Selon un autre mode de réalisation, le dispositif de liaison comprend un capot positionné autour de la première lame.

Selon un autre mode de réalisation, le dispositif de liaison comprend en outre un moteur ayant un arbre de sortie selon l'axe Z relié au support, destiné à enrouler et déployer la première lame.

Selon un autre mode de réalisation, le dispositif de liaison comprend un dispositif de guidage de la première lame.

Selon un autre mode de réalisation, le dispositif de liaison comprend un dispositif de découpe destiné à couper la première lame.

Selon un autre mode de réalisation, le dispositif de liaison comprend une deuxième lame superposée à la première lame, apte à passer d'une configuration enroulée autour de l'axe Z autour du support fixé au premier objet à une configuration déployée selon l'axe X sensiblement perpendiculaire à l'axe Z, la deuxième lame ayant une extrémité destinée à entrer en contact avec un troisième objet, de manière à lier le premier objet au troisième objet.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un schéma en coupe dans un plan XY d'un premier mode de réalisation d'un dispositif de lancement d'un projectile, ainsi qu'une vue en coupe d'une section du projectile dans un plan YZ perpendiculaire au plan XY,
- les figures 2a et 2b représentent un schéma, en coupe dans le plan XY, d'un deuxième mode de réalisation d'un dispositif de lancement du projectile,
- la figure 3 représente un schéma, en coupe dans le plan XY, d'un troisième mode de réalisation d'un dispositif de lancement du projectile,
- les figures 4a et 4b représentent un schéma, en coupe dans le plan XY, d'un quatrième mode de réalisation d'un dispositif de lancement du projectile,
- la figure 5 représente un schéma, en coupe dans le plan XY, d'un premier mode de réalisation d'un dispositif de liaison destiné à lier un premier objet à un deuxième objet selon l'invention,
- les figures 6a et 6b représentent un schéma, en coupe dans le plan XY, d'un deuxième mode de réalisation du dispositif de liaison selon l'invention,
- les figures 7a et 7b représentent un schéma, en coupe dans le plan XY, d'un troisième mode de réalisation du dispositif de liaison selon l'invention,
- la figure 8 représente un schéma, en coupe dans le plan XY, d'un quatrième mode de réalisation du dispositif de liaison selon l'invention,
- la figure 9 représente un schéma, en coupe dans le plan XY, d'un cinquième mode de réalisation du dispositif de liaison selon l'invention,
- la figure 10 représente un schéma, en coupe dans le plan XY, d'un cinquième mode de réalisation du dispositif de lancement d'un projectile incluant un dispositif de liaison,
- les figures 11a et 11b représentent un schéma, en coupe dans le plan XY, de deux modes de réalisation du dispositif de liaison selon l'invention,
- la figure 12 représente un schéma, en coupe dans le plan XY, d'un seconde mode de réalisation du dispositif de lancement d'un projectile incluant un dispositif de liaison.

Par souci de clarté, les mêmes éléments porteront les mêmes repères dans les différentes figures.

Il est à noter que l'invention est décrite dans le cadre d'une utilisation dans le domaine spatial. Néanmoins, elle trouve également application dans l'atmosphère terrestre, par exemple sur un navire afin de récupérer des débris dans l'eau ou flottant à la surface de l'eau ou sur le sol terrestre afin de tracter un objet.

Et plus généralement, l'invention trouve application dans tous les cas de figure où un premier objet est lié à un deuxième objet.

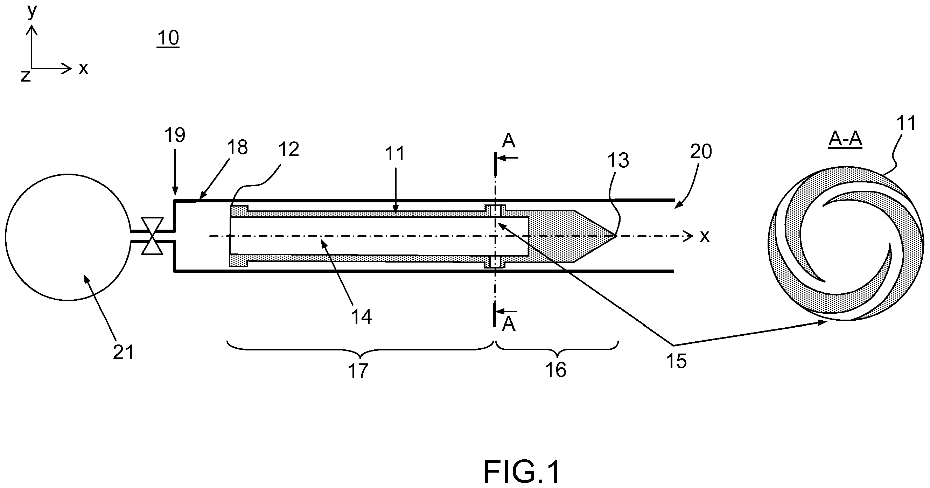

La figure 1 représente un schéma en coupe dans un plan XY d'un premier mode de réalisation d'un dispositif 10 de lancement d'un projectile 11 ainsi qu'un canon 18, ainsi qu'une vue en coupe d'une section du projectile 11 dans un plan YZ perpendiculaire au plan XY. Le projectile 11 s'étend selon un axe X entre deux extrémités 12, 13. Le projectile 11 est destiné à être positionné dans le canon 18 de forme sensiblement cylindrique d'axe X. Le projectile 11 comprend une partie creuse 14 en son centre s'ouvrant sur une première 12 des deux extrémités du projectile 11, destinée à recevoir un fluide comprimé. Le projectile 11 comprend une pluralité d'évents 15 traversant le projectile 11 depuis la partie creuse 14 sensiblement perpendiculairement à l'axe X et à sortie sensiblement radiale, destinée à expulser le fluide comprimé sensiblement tangentiellement au projectile 11. De préférence, mais pas obligatoirement, le fluide comprimé peut être un gaz comprimé. Le fluide comprimé entre dans le projectile 11 par la partie creuse 14 et sort tangentiellement à la section du projectile 11 par les évents 15. La sortie du fluide comprimé tangentiellement à la section du projectile 11 par les évents 15 crée un couple sur le projectile qui le fait tourner sur lui-même. Autrement dit, le projectile 11 est mis en rotation sur lui-même, autour de l'axe X. En entrant dans le projectile 11, le fluide comprimé entraîne une augmentation de la pression dans le projectile. Cette augmentation de la pression génère une translation du projectile selon l'axe X, ce qui permet une projection du projectile 11. En même temps, la pression du fluide ainsi que l'écoulement du fluide dans les évents génèrent une rotation du projectile sur lui-même. Ainsi, la partie creuse 14 et les évents 15 du projectile 11 permettent à la fois un mouvement de translation selon l'axe X et un mouvement de rotation autour de l'axe X du projectile 11. Sur la vue en coupe dans le plan YZ de la figure 1, le projectile 11 comprend 3 évents. Pour une bonne mise en rotation du projectile 11, il faut au moins deux évents, mais il est également possible d'en avoir trois ou plus.

Le projectile 11 comprend une tête 16 et un corps 17. La tête 16 du projectile 11 s'étend d'une seconde 13 des deux extrémités du projectile 11 jusqu'à la pluralité d'évents 15. Le corps 17 du projectile 11 s'étend depuis la tête 16 jusqu'à la première extrémité 12 du projectile 11.

Le canon 18 a deux extrémités 19, 20, dans lequel est positionné le projectile 11, une première 19 des deux extrémités du canon 18 permettant l'entrée du fluide comprimé dans le canon 18, une seconde 20 des deux extrémités permettant la sortie du projectile 11.

Enfin, le dispositif 10 de mise en rotation du projectile 11 comprend un réservoir 21 de fluide comprimé relié à la première extrémité 19 du canon 18 dans lequel se trouve le projectile 11, de façon à alimenter le projectile 11 en fluide comprimé.

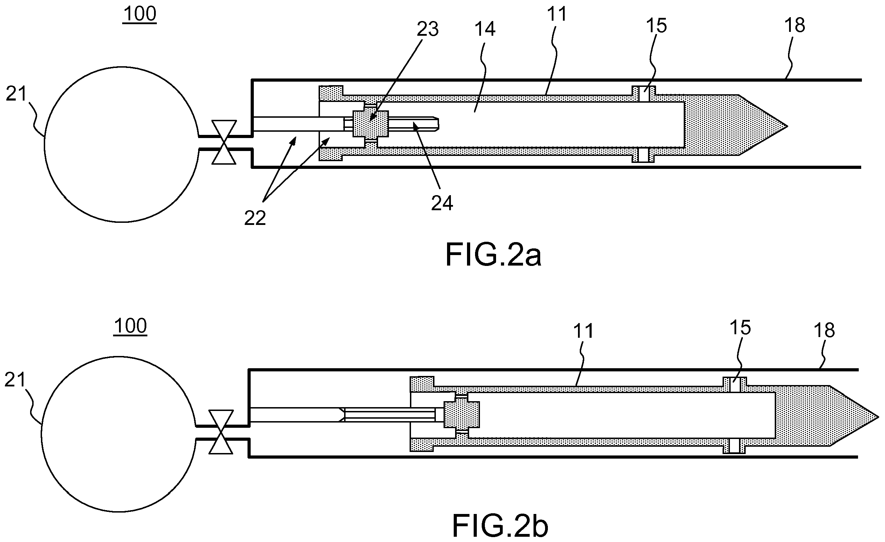

Les figures 2a et 2b représentent un schéma, en coupe dans le plan XY, d'un deuxième mode de réalisation d'un dispositif 100 de lancement du projectile 11. Le canon 18 comprend un premier 23 de deux éléments 23, 24 de liaison hélicoïdale. Le projectile 11 comprend un second 24 de deux éléments 23, 24 de liaison hélicoïdale fixé dans la partie creuse 14 du projectile 11, le premier 23 et le second 24 éléments de liaison hélicoïdale formant un mécanisme 22 de mouvement combiné, de manière à générer simultanément une rotation autour de l'axe X et translation selon l'axe X du projectile 11 par rapport au canon 18. Le mécanisme 22 de mouvement combiné peut être un ensemble vis-écrou, ou préférentiellement un ensemble avec une vis à billes ou vis à rouleaux pour limiter les frottements entre les deux éléments 23, 24 de liaison. La pression du fluide comprimé pousse le projectile 11 à l'extérieur du canon 18. Comme nous l'avons vu précédemment, les évents 15 à sortie sensiblement radiale permettent de générer un mouvement de rotation autour de l'axe X du projectile 11. Or, comme on souhaite que le projectile maintienne sa trajectoire dans son axe, trajectoire selon l'axe X, il est souhaitable qu'il soit bien accéléré en rotation autour de son axe X pour qu'il reste toujours orienté dans la même direction. L'un des deux éléments 23 ou 24 est assimilable à une tige filetée et l'autre des deux éléments 23 ou 24 est assimilable à un écrou. Selon le nombre N de pas sur lequel l'écrou est en prise sur la tige filetée, le projectile 11 effectuera le même nombre N de tours sur lui-même, donc un mouvement de N rotations, comme représenté sur la figure 2a, avant d'être libéré en translation et de pouvoir être éjecté, comme représenté sur la figure 2b. Le mécanisme 22 de liaison permet donc au projectile 11 d'acquérir une plus grande accélération angulaire autour de l'axe X avant d'accélérer en translation selon l'axe X.

Il est à noter que sur les figures 2a et 2b, la vis est fixée au canon 18 et l'écrou dans la partie creuse 14 du projectile 11. Néanmoins, il est tout à fait possible de les inverser, c'est-à-dire de fixer la vis dans la partie creuse 14 du projectile 11 et l'écrou au canon 18.

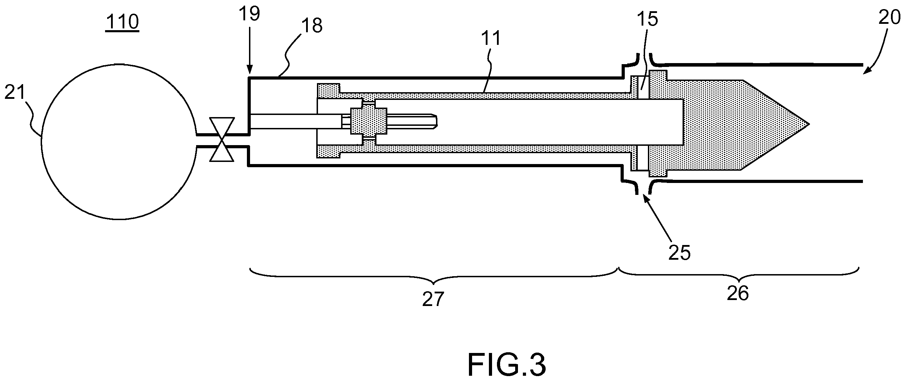

La figure 3 représente un schéma, en coupe dans le plan XY, d'un troisième mode de réalisation d'un dispositif 110 de lancement du projectile 11 comprenant le canon 18. Le canon 18 comprend une première ouverture sensiblement radiale 25. Cette ouverture sensiblement radiale 25 permet au fluide comprimé de sortir du canon 18 après son écoulement à travers le projectile 11.

Le canon 18 comprend une tête 26 et un corps 27, la tête 26 du canon 18 s'étendant de la seconde 20 des deux extrémités du canon 18 jusqu'à l'ouverture 25, le corps 27 du canon 18 s'étendant depuis la tête 26 du canon 18 jusqu'à la première 19 des deux extrémités du canon 18.

On peut noter par ailleurs que le diamètre du corps 27 du canon 18 est inférieur au diamètre de la tête 26 du canon 18. De plus, le diamètre du corps 17 du projectile 11 est inférieur au diamètre de la tête 16 du projectile 11. Et le diamètre du corps 17 du projectile 11 est inférieur au diamètre du corps 27 du canon 18 et le diamètre de la tête 16 du projectile 11 est inférieur au diamètre de la tête 26 du canon 18.

Autrement dit, le diamètre de la tête 26 du canon 28 est sensiblement supérieur au diamètre de la tête 16 du projectile 11, et le diamètre du corps 27 du canon 18 est sensiblement supérieur au diamètre du corps 17 du projectile 11.

Cette différence de diamètres entre les corps et les têtes respectivement constitue un système de guidage du projectile 11. En effet, les corps correspondant à un premier diamètre inférieur à un second diamètre correspondant à celui des têtes, lors de son éjection, le projectile 11 se libère simultanément au niveau du corps et de la tête. Cette configuration évite ainsi toute perturbation dans la trajectoire du projectile 11 qui pourrait être générée par les vibrations au niveau du canon.

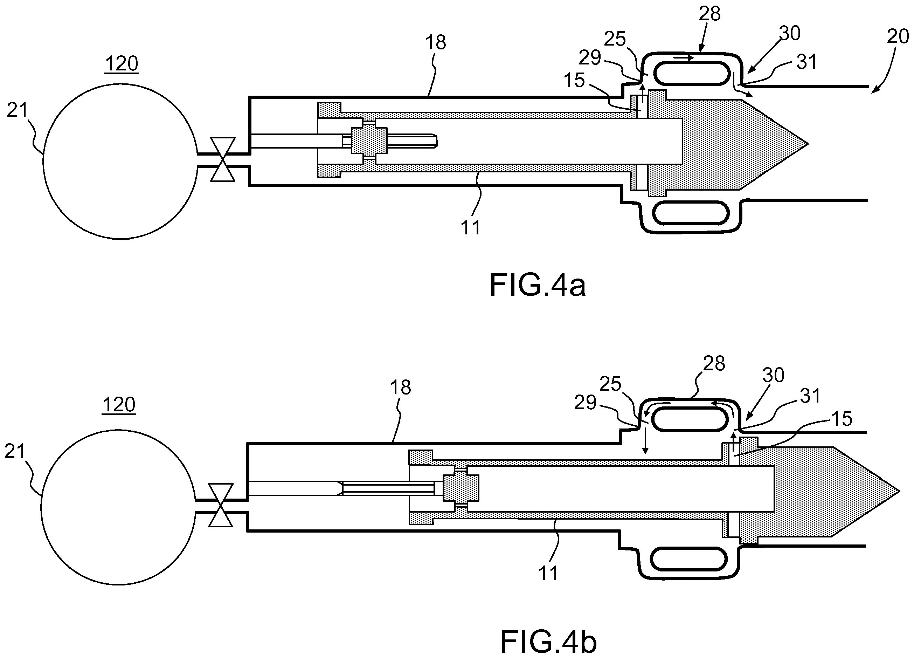

Les figures 4a et 4b représentent un schéma, en coupe dans le plan XY, d'un quatrième mode de réalisation d'un dispositif 120 de lancement du projectile 11 comprenant le canon 18. Le canon 18 comprend un conduit d'évacuation 28 ayant deux extrémités 29, 30. Le canon 18 comprend une seconde ouverture 31 entre la première ouverture 25 du canon 18 et la seconde 20 des deux extrémités du canon 18. Une première 29 des deux extrémités du conduit d'évacuation 28 est reliée à la première ouverture 25 du canon 18 et une seconde 30 des deux extrémités du conduit d'évacuation 28 est reliée à la seconde ouverture 31 du canon 18. Le fluide comprimé ayant une certaine pression et un certain débit devra, après son passage à travers le projectile 11, être évacué du canon 18. Comme expliqué précédemment avec la figure 3, le fluide comprimé peut simplement s'évacuer à travers l'ouverture radiale 25 du canon 18. Dans ce cas, le fluide comprimé est libéré vers l'extérieur (espace, atmosphère, c'est-à-dire dans le lieu d'utilisation du dispositif de mise en rotation du projectile). Il est également possible d'utiliser l'évacuation du fluide comprimé pour générer un effet aérodynamique sur le projectile 11, comme montré sur les figures 4a et 4b. Sur la figure 4a, le projectile 11 est dans une phase d'accélération angulaire. Le mécanisme 22 de mouvement combiné favorise l'accélération en rotation du projectile 11 et l'ouverture radiale 25 se trouve sensiblement en vis-à-vis d'au moins un évent 15. Le fluide comprimé sort du projectile 11 par l'évent, génère un couple sur le projectile 11 et le fait tourner sur lui-même. Le fluide comprimé entre alors dans le conduit d'évacuation 28 par la première extrémité 29 (c'est-à-dire par l'ouverture radiale 25) et ressort du conduit d'évacuation 28 par la seconde extrémité 30 (c'est-à-dire la seconde ouverture 31). Comme représenté sur la figure 4b, en phase de translation selon l'axe X, les éléments de liaison 23, 24 du mécanisme 22 de mouvement combiné étant libérés l'un de l'autre, c'est-à-dire le projectile 11 ayant acquis une accélération angulaire suffisante, le projectile 11 se déplace vers l'extrémité 20 du canon 18. Les évents 15 se trouvent alors en vis-à-vis de la seconde extrémité 30 du conduit d'évacuation 28. Le fluide comprimé entre alors dans le conduit d'évacuation 28 par la seconde extrémité 30 et ressort du conduit d'évacuation 28 par l'ouverture radiale 25 au niveau de la première extrémité 29 du conduit d'évacuation 28. L'écoulement du fluide comprimé vers le corps 27 du canon 18 va générer une augmentation de pression dans le corps 27 du canon 18 et ainsi générer une force supplémentaire sur le projectile selon l'axe X, favorisant l'accélération en translation selon l'axe X du projectile 11.

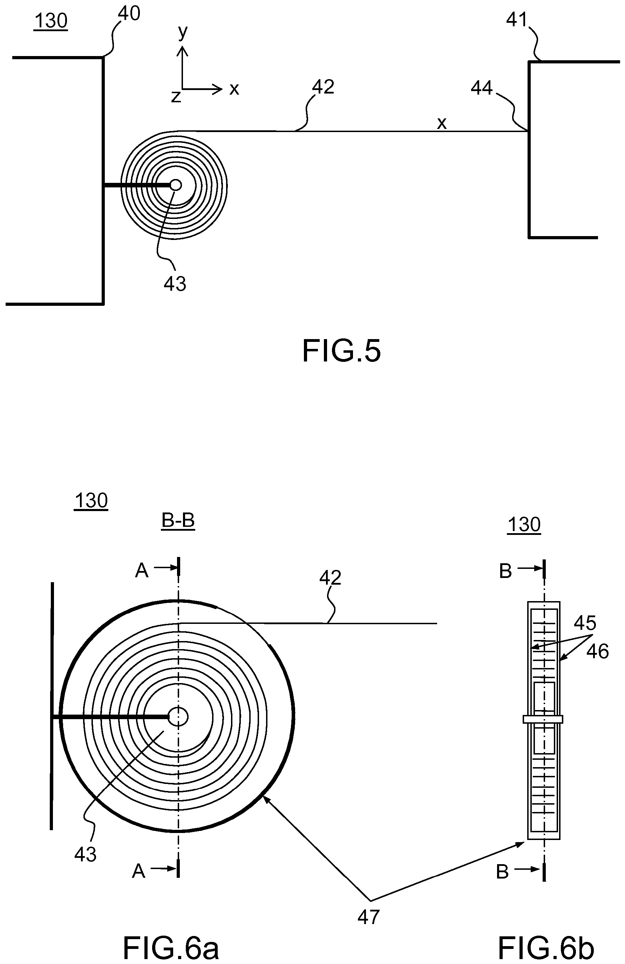

La figure 5 représente un schéma, en coupe dans le plan XY, d'un premier mode de réalisation d'un dispositif 130 de liaison selon l'invention comprenant un premier objet 40, un deuxième objet 41. Le dispositif de liaison 130 comprend une première lame 42, apte à passer d'une configuration enroulée autour d'un axe Z autour d'un support 43 fixé au premier objet 40 à une configuration déployée selon un axe X sensiblement perpendiculaire à l'axe Z, la lame 42 ayant une extrémité 44 destinée à entrer en contact avec le deuxième objet 41, de manière à lier le premier objet 40 et le deuxième objet 41.

Une lame s'enroule et se déroule facilement, avec un encombrement minimum en configuration enroulée, car enroulée autour de l'axe Z et sensiblement dans le plan XY, ce qui évite à la lame de s'emmêler. Néanmoins, on peut également considérer un câble ou une corde à la place de la lame, le câble ou la corde, tout comme la lame 42, étant apte à passer d'une configuration enroulée autour de l'axe Z autour du support 43 fixé au premier objet 40 à une configuration déployée selon l'axe X.

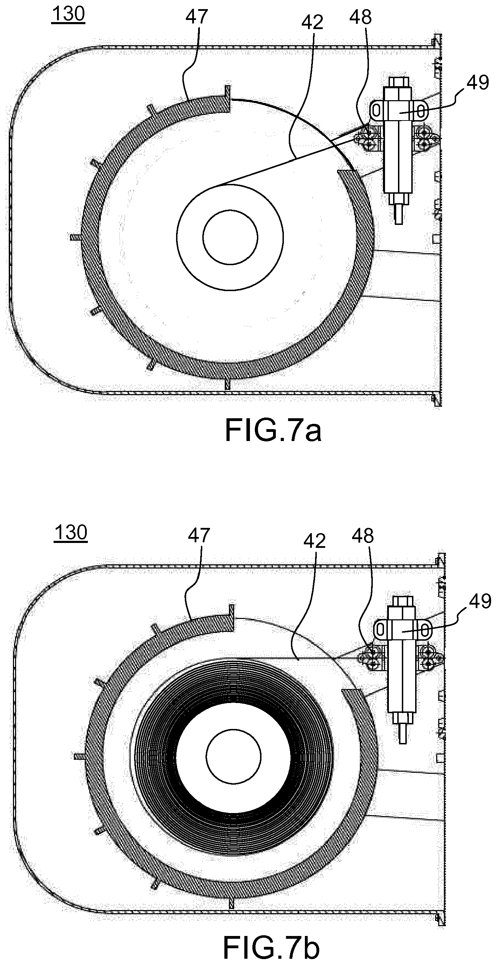

Les figures 6a et 6b représentent un schéma, en coupe dans le plan XY, d'un deuxième mode de réalisation du dispositif de liaison 130 selon l'invention. Le dispositif de liaison 130 comprend un premier 45 et un second 46 flasques positionnés sensiblement parallèlement au plan XY, de part et d'autre de la première lame 42, et un capot 47 positionné autour de la première lame 42. Les deux flasques 45, 46 permettent à la lame 42 de ne pas sortir de son enroulement lorsque la lame 42 se déroule. Le capot 47 évite aussi à la lame 42 de trop se dérouler. En effet, il est parfois nécessaire d'avoir une certaine longueur de lame 42 rapidement disponible pour entrer en contact avec le deuxième objet 41 ou le tracter. Dans ce cas, on peut être amené à dérouler entre les deux flasques 45, 46 la lame 42, par exemple 5 à 20 mètres de lame 42, et le capot 47 permet de maintenir cette longueur déroulée autour du support 43. On visualise ces exemples sur les figures 7a et 7b.

Les figures 7a et 7b représentent un schéma, en coupe dans le plan XY, d'un troisième mode de réalisation du dispositif de liaison selon l'invention. Le dispositif de liaison 130 comprend un dispositif de guidage 48 de la première lame 42. Le dispositif de guidage 48 peut être constitué par deux appuis simples de part et d'autre de la lame 42 pour la guider dans son déploiement. Les appuis simples peuvent être des galets formant une liaison ponctuelle sur la lame 42 ou des doigts formant une liaison longitudinale sur la largeur de la lame 42.

En outre, le dispositif de liaison 130 peut comprendre un dispositif de découpe 49 destiné à couper la première lame 42. Une telle découpe peut être nécessaire si on ne souhaite plus entrer en contact avec le deuxième objet ou si on ne souhaite plus le tracter pour des raisons de sécurité ou de manœuvrabilité. Le dispositif de découpe peut être une cisaille pyro ou tout autre type de cisaille adaptée.

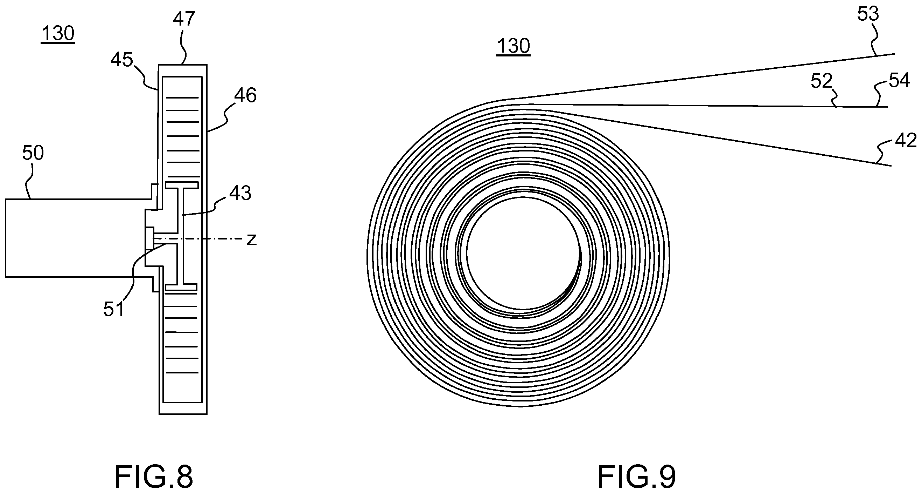

La figure 8 représente un schéma, en coupe dans le plan XY, d'un quatrième mode de réalisation du dispositif de liaison 130 selon l'invention. Le dispositif de liaison 130 peut comprendre en outre un moteur 50 ayant un arbre de sortie 51 selon l'axe Z relié au support 43, destiné à enrouler et déployer la première lame 42.

La figure 9 représente un schéma, en coupe dans le plan XY, d'un cinquième mode de réalisation du dispositif de liaison 130 selon l'invention. Le dispositif de liaison 130 peut comprendre au moins une deuxième lame 52 superposée à la première lame 42, apte à passer d'une configuration enroulée autour de l'axe Z autour du support 43 fixé au premier objet 40 à une configuration déployée selon l'axe X sensiblement perpendiculaire à l'axe Z, la lame 52 ayant une extrémité 54 destinée à entrer en contact avec un troisième objet (non représenté), de manière à lier le premier objet 40 et le troisième objet. La lame 52 est superposée à la lame 42. De manière similaire, une troisième lame 53 peut être enroulée autour du support 43 en étant superposée aux lames 42 et 52. Cette configuration d'enroulement de lame est avantageuse puisqu'elle permet d'enrouler plusieurs lames destinées à entrer en contact avec plusieurs objets, avec un encombrement minimum. De même, l'invention concerne aussi une configuration où le dispositif de liaison 130 comprend quatre lames, ou plus, superposées entre elles et permettant de lier un cinquième objet, ou plus, au premier objet 40.

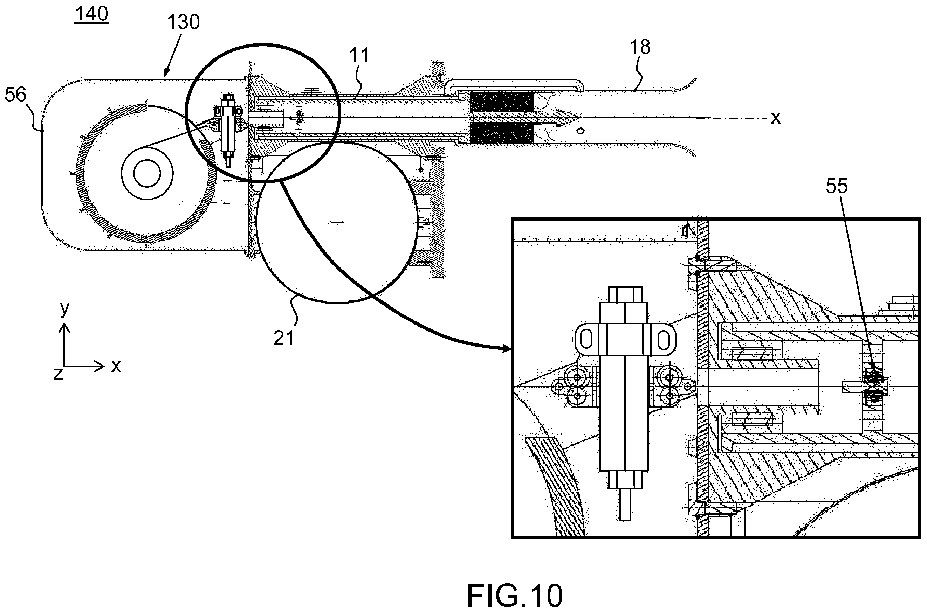

La figure 10 représente un schéma, en coupe dans le plan XY, d'un cinquième mode de réalisation d'un dispositif 140 de lancement d'un projectile par fluide comprimé comprenant le canon 18, un réservoir 21 de fluide comprimé relié à la première 19 des deux extrémités du canon 18. Le dispositif 140 de lancement comprend un dispositif de liaison 130 décrit précédemment, le projectile 11 étant alors le deuxième objet 41. Le support 43 est fixé au dispositif 140. L'extrémité 44 de la première lame 42 est liée au deuxième objet, c'est-à-dire au projectile 11 par un élément de liaison 55. L'élément de liaison 55 est un composant mécanique permettant la rotation du projectile 11 autour de l'axe X. Il peut s'agir d'un roulement à bille autorisant la rotation autour de l'axe X du projectile 11. Ainsi le dispositif de liaison 130 permet, en même temps que la lame se déploie pour l'envoi du projectile, sa rotation sur lui-même (spin). Dans l'espace, pour la récupération de débris spatiaux, afin d'assurer la sécurité du chasseur, il est nécessaire de se positionner à plusieurs centaines de mètres du satellite à harponner. De ce fait, il est impossible d'harponner avec un harpon de type terrestre qui se déroule simplement. Autrement dit, il est nécessaire d'avoir la combinaison du déroulement de la lame et le spin du projectile ou harpon. En effet, dans l'espace, aucun effet aérodynamique ne permet de maintenir l'orientation du harpon dans l'axe de sa trajectoire. Une fois lancé, le harpon, maintenu par la lame et grâce à sa rotation sur lui-même, se dirige dans la direction souhaitée vers l'objet cible. Cette configuration permet d'obtenir un faible encombrement lorsque la lame est enroulée autour de son support, et grâce à la rotation du projectile sur lui-même, il est possible d'harponner un débris en étant positionné à grande distance. Puisque la rotation du projectile sur lui-même lui permet de se maintenir dans l'axe de sa trajectoire, il n'est pas nécessaire que la lame présente une rigidité particulière tel un mât. Outre le faible coût que cette solution représente, elle est également facile à mettre en œuvre.

Le support 43 est fixé dans le canon 18. Avantageusement, le support 43 est fixé à proximité de la première 19 des deux extrémités du canon 18. Autrement dit, le dispositif de liaison 130 est positionné dans une partie arrière du canon 18, où se fait l'entrée du fluide comprimé. Ainsi, le fluide comprimé issu du réservoir 21 occupe la partie arrière du canon 18. Le fluide comprimé pénètre alors dans le canon 18 au niveau de son extrémité 19 puis entre dans la partie creuse 14 du projectile 11 pour en ressortir par les évents 15, de manière à générer un mouvement de rotation du projectile 11 sur lui-même ainsi qu'une translation du projectile selon l'axe X.

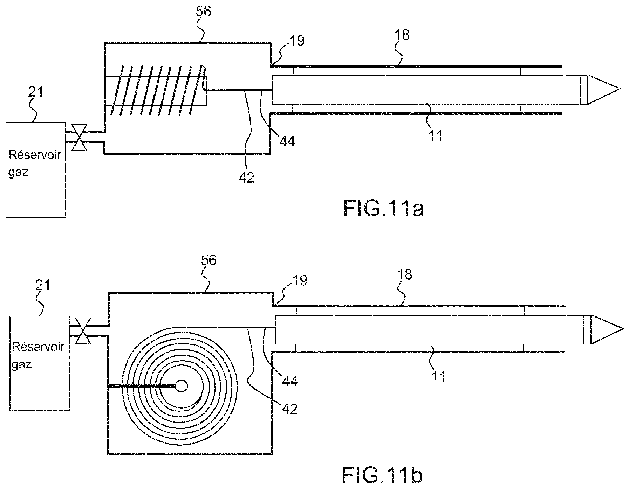

Les figures 11a et 11b représentent un schéma, en coupe dans le plan XY, de deux modes de réalisation du dispositif de liaison 130 selon l'invention. Comme expliqué précédemment, le dispositif de liaison 130 est positionné dans le canon 18. L'extrémité 44 de la lame 42 est fixée au projectile 11 par l'élément de liaison 55 (non représenté sur ces figures). Autrement dit, le premier objet 40 est le canon 18, le deuxième objet 41 est le projectile 11. Ainsi la lame 42, tout en étant fixée au projectile 11, ne va pas perturber sa trajectoire une fois que le projectile 11 ne sera plus dans le canon 18. Par ailleurs, la liaison de la lame 42 au projectile se faisant dans le canon 18, aucune fuite de fluide, et donc de pression, ne peut avoir lieu.

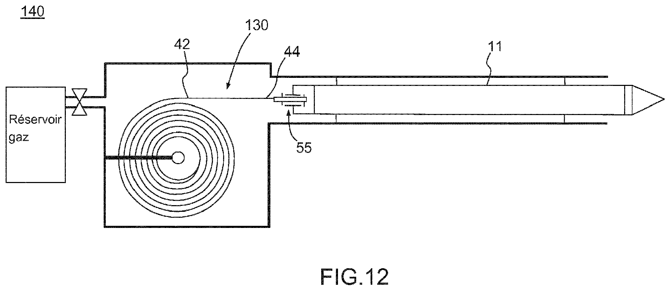

La figure 12 représente un schéma, en coupe dans le plan XY, d'un seconde mode de réalisation du dispositif 140 de lancement d'un projectile 11 incluant un dispositif de liaison 130 selon l'invention. Tous les éléments de la figure 12 sont identiques aux éléments de la figure 11b. Ce mode de réalisation permet de visualiser l'élément de liaison 55 de l'extrémité 44 de la lame 42 et du projectile 11, comme mentionné précédemment avec les figures 11a et 11b.

## Revendications

1. Ensemble comprenant un premier objet (40) et un deuxième objet (41) et un dispositif de liaison (130) comprenant une première lame (42), apte à passer d'une configuration enroulée autour d'un axe Z autour d'un support (43) fixé au premier objet (40) à une configuration déployée selon un axe X sensiblement perpendiculaire à l'axe Z, la lame (42) ayant une extrémité (44) liant le premier objet (40) au deuxième objet (41), **caractérisé en ce que** l'extrémité (44) de la première lame (42) est liée au deuxième objet (41) par un élément de liaison (55), et **en ce que** l'élément de liaison (55) est un composant mécanique permettant la rotation du deuxième objet (41) autour de l'axe X.

2. Ensemble selon la revendication précédente, **caractérisé en ce qu'**il comprend un premier (45) et un second flasque (46) positionnés sensiblement parallèlement au plan XY, de part et d'autre de la première lame (42) en configuration enroulée.

3. Ensemble selon l'une des revendications précédentes, **caractérisé en ce qu'**il comprend un capot (47) positionné autour de la première lame (42) en configuration enroulée.

4. Ensemble selon l'une des revendications précédentes, **caractérisé en ce qu'**il comprend en outre un moteur (50) ayant un arbre de sortie (51) selon l'axe Z relié au support (43), destiné à enrouler et déployer la première lame (42).

5. Ensemble selon l'une des revendications précédentes, **caractérisé en ce qu'**il comprend un dispositif de guidage (48) de la première lame (42).

6. Ensemble selon l'une des revendications précédentes, **caractérisé en ce qu'**il comprend un dispositif de découpe (49) destiné à couper la première lame (42).

7. Ensemble selon l'une des revendications précédentes, **caractérisé en ce qu'**il comprend une deuxième lame (53) superposée à la première lame (42), apte à passer d'une configuration enroulée autour de l'axe Z autour du support (43) fixé au premier objet (40) à une configuration déployée selon l'axe X sensiblement perpendiculaire à l'axe Z, la deuxième lame (53) ayant une extrémité destinée à entrer en contact avec un troisième objet, de manière à lier le premier objet (40) au troisième objet.

## Patentansprüche

1. Baugruppe, beinhaltend ein erstes Objekt (40) und ein zweites Objekt (41) und eine Verbindungsvorrichtung (130), beinhaltend ein erstes Blatt (42), welches in der Lage ist, von einer um eine Achse Z um eine an dem ersten Objekt (40) befestigte Stütze (43) eingerollten Konfiguration zu einer entlang einer Achse X, welche im Wesentlichen rechtwinklig zur Achse Z ist, ausgebreiteten Konfiguration überzugehen, wobei das Blatt (42) ein Ende (44) aufweist, welches das erste Objekt (40) mit dem zweiten Objekt (41) verbindet, **dadurch gekennzeichnet, dass** das Ende (44) des ersten Blattes (42) mit dem zweiten Objekt (41) durch ein Verbindungselement (55) verbunden ist und dadurch, dass das Verbindungselement (55) ein mechanisches Bauteil ist, welches die Drehung des zweiten Objekts (41) um die Achse X ermöglicht.

2. Baugruppe nach dem vorhergehenden Anspruch, **dadurch gekennzeichnet, dass** sie einen ersten (45) und einen zweiten Flansch (46) beinhaltet, welche im Wesentlichen parallel zur Ebene XY, beiderseits des ersten Blattes (42) in eingerollter Konfiguration, positioniert sind.

3. Baugruppe nach einem der vorhergehenden Ansprüche, **dadurch gekennzeichnet, dass** sie eine Haube (47) besitzt, welche um das erste Blatt (42) in eingerollter Konfiguration positioniert ist.

4. Baugruppe nach einem der vorhergehenden Ansprüche, **dadurch gekennzeichnet, dass** sie zudem einen Motor (50) beinhaltet, welche eine Ausgangswelle (51) entlang der Achse Z besitzt, welche mit der Stütze (43) verbunden ist, welche zum Einrollen und Ausbreiten des ersten Blattes (42) bestimmt ist.

5. Baugruppe nach einem der vorhergehenden Ansprüche, **dadurch gekennzeichnet, dass** sie eine Führungsvorrichtung (48) des ersten Blattes (42) beinhaltet.

6. Baugruppe nach einem der vorhergehenden Ansprüche, **dadurch gekennzeichnet, dass** sie eine Schneidvorrichtung (49) zum Schneiden des ersten Blattes (42) beinhaltet.

7. Baugruppe nach einem der vorhergehenden Ansprüche, **dadurch gekennzeichnet, dass** sie ein zweites Blatt (53) beinhaltet, welches das erste Blatt (42) überlagert und in der Lage ist, von einer um eine Achse Z um eine an dem ersten Objekt (40) befestigte Stütze (43) eingerollten Konfiguration zu einer entlang einer Achse X, welche im Wesentlichen rechtwinklig zur Achse Z ist, ausgebreiteten Konfiguration überzugehen, wobei das zweite Blatt (53) ein Ende aufweist, welches dazu bestimmt ist, mit einem dritten Objekt in einer Weise in Kontakt zu gehen, dass das erste Objekt (40) mit dem dritten Objekt verbunden wird.

## Claims

1. Assembly comprising a first object (40) and a second object (41) and a link device (130) comprising a first strip (42), capable of passing from a configuration wound about an axis Z about a support (43) fixed to the first object (40) to a configuration deployed along an axis X substantially at right angles to the axis Z, the strip (42) having an end (44) linking the first object (40) to the second object (41), **characterized in that** the end (44) of the first strip (42) is linked to the second object (41) by a link element (55), and **in that** the link element (55) is a mechanical component allowing the rotation of the second object (41) about the axis X.

2. Assembly as claimed in the preceding claim, **characterized in that** it comprises a first flange (45) and a second flange (46) positioned substantially parallel to the plane XY, on either side of the first strip (42) in a wound configuration.

3. Assembly as claimed in one of the preceding claims, **characterized in that** it comprises a cover (47) positioned around the first strip (42) in a wound configuration.

4. Assembly as claimed in one of the preceding claims, **characterized in that** it further comprises a motor (50) having an output shaft (51) along the axis Z linked to the support (43), intended to wind and deploy the first strip (42).

5. Assembly as claimed in one of the preceding claims, **characterized in that** it comprises a guiding device (48) for the first strip (42).

6. Assembly as claimed in one of the preceding claims, **characterized in that** it comprises a cutting device (49) intended to cut the first strip (42).

7. Assembly as claimed in one of the preceding claims, **characterized in that** it comprises a second strip (53) superposed on the first strip (42), capable of passing from a configuration wound about the axis Z about the support (43) fixed to the first object (40) to a configuration deployed along the axis X substantially at right angles to the axis Z, the second strip (53) having an end intended to come into contact with a third object, so as to link the first object (40) to the third object.
